# EUROPEAN PATENT APPLICATION

(11) **EP 4 350 564 A1**
(43) Date of publication of application: **10.04.2024**
(21) Application number: 22815645.1
(22) Date of filing: 22.03.2022
(51) Int. Cl.: G06F 30/13, G05B 19/418, G06F 113/14

(54) **AUTOMATIC LAYOUT DESIGN METHOD, AUTOMATIC LAYOUT DESIGN DEVICE, AND AUTOMATIC LAYOUT DESIGN SYSTEM**

(30) Priority: 04.06.2021 JP 2021094060
(71) Applicant: Kurita Water Industries Ltd., Tokyo 164-0001 (JP); FRACTA LEAP K.K., Tokyo 150-0002 (JP)
(72) Inventor: UKEGAWA, Katsuyuki, Tokyo 150-0002 (JP); MURAI, Shinya, Tokyo 150-0002 (JP)
(74) Representative: Godemeyer Blum Lenze Patentanwälte Partnerschaft mbB - werkpatent
(86) International application number: PCT/JP2022/013061
(87) International publication number: WO 2022/254888

(57) **Abstract**

The present invention makes it possible to generate layout information in a short time, even for large-scale plants. Provided is an automatic layout design method at least including: a classification step in which an arithmetic calculation unit provided in a computer classifies a plurality of devices that are arranged on a floor of a plant into a plurality of device groups on the basis of the degree of relevance between the plurality of devices; and a general design step in which the arithmetic calculation unit generates general layout information wherein device groups are arranged on the floor, such that the sum of distances between device groups is minimized.

## Description

### BACKGROUND

### Technical Field

The present invention relates to an automatic layout design method, an automatic layout design device, and an automatic layout design system.

### Related Art

Conventionally, in the design of plants (plant facilities), technology has been used to make the design more efficient by having a computer generate layout information in which devices, components, and the like are automatically arranged.

For example, Patent Literature 1 discloses "a plant layout design method, including: an arrangement element generating process of generating arrangement elements in which plant equipment comprising plant devices that constitutes a plant and their connection equipment are grouped according to logical connection relationships and physical conditions; an arrangement element arrangement plan generating process of generating an arrangement plan for each arrangement element generated in the arrangement element generating process on a layout target space by using evaluation values related to the arrangement of the arrangement elements; a plant equipment arrangement plan generating process of generating an arrangement plan for each plant equipment in each arrangement element for which an arrangement plan has been generated in the arrangement element arrangement plan generating process, by using evaluation values related to the arrangement of the plant equipment; and an arrangement plan adjustment process of adjusting the arrangement plan by repeating the arrangement element arrangement plan generating process and the plant equipment arrangement plan generating process, as necessary".

### Citation List

### Patent Literature

[Patent Literature 1] JP10-124566

### SUMMARY

### Technical Problem

However, with the technology disclosed in, for example, Patent Literature 1, there is a problem that as the scale of the plant becomes larger, the number of devices and constraint conditions, making it difficult for a computer to generate layout information in a short time.

Therefore, the main purpose of the present invention is to provide an automatic layout design method, an automatic layout design device, and an automatic layout design system capable of generating layout information in a short time, even for large-scale plants.

### Solution to Problem

The present invention provides an automatic layout design method at least including: a classification step in which an arithmetic calculation unit provided in a computer classifies multiple devices that are arranged on a floor of a plant into multiple device groups on the basis of a degree of relevance between the multiple devices; and a general design step in which the arithmetic calculation unit generates general layout information wherein the device groups arranged on the floor, such that a sum of distances between the device groups is minimized.

The automatic layout design method may further include a floor space calculation step in which the arithmetic calculation unit calculates a floor space for each of the device groups by modifying an arrangement pattern of the multiple devices in the device groups.

The arithmetic calculation unit may generate the general layout information on the basis of general constraint conditions in the general design step.

The general constraint conditions may at least include one among a group including the floor space, location of a junction point, and sequence of construction processes of the plant.

The automatic layout design method may further include a display step in which a display unit provided in the computer displays the general layout information; a reception step in which a reception unit provided in the computer receives an evaluation result for the general layout information; and an arrangement modification step in which the arithmetic calculation unit modifies an arrangement of the device groups on the basis of the evaluation result.

The automatic layout design method may further include a detailed design step in which the arithmetic calculation unit generates detailed layout information on the basis of detailed constraint conditions after the general design step.

The detailed constraint conditions may at least include one among a group including: length of pipes connected between the devices, location of a pipe rack, arrangement direction of the devices, height of the devices, type of the devices, spacing between the devices, degree of relevance between the device groups, and sequence of construction processes of the plant.

The automatic layout design method may further include a range adjustment step in which the arithmetic calculation unit adjusts a target range in the detailed layout information on the basis of generation time or accuracy of the detailed layout information.

The general layout information may include a shape of each of the multiple devices included in the device groups.

The present invention may also include an automatic layout design device including an arithmetic calculation that: classifies multiple devices that are arranged on a floor of a plant into multiple device groups on the basis of a degree of relevance between the multiple devices; generates general layout information wherein the device groups are arranged on the floor, such that a sum of distances between the device groups is minimized; and generates detailed layout information on the basis of detailed constraint conditions.

The present invention also provides an automatic layout design system including the automatic layout design device.

### Effects

According to the present invention, it is possible to provide an automatic layout design method, an automatic layout design device, and an automatic layout design system capable of generating layout information in a short time, even for large-scale plants. The effects described herein are examples only and are not limited, and other effects may also be possible.

### BRIEF DESCRIPTION OF THE DRAWINGS

Figure 1 is a flowchart showing an example of an automatic layout design method according to an embodiment of the present invention.
Figure 2 is a diagram showing an example of layout information according to an embodiment of the present invention.
Figure 3 is a diagram showing an example of layout information according to an embodiment of the present invention.
Figure 4 is a flowchart showing an example of an automatic layout design method according to an embodiment of the present invention.
Figure 5 is a table showing an example of constraint conditions according to an embodiment of the present invention.
Figure 6 is a flowchart showing an example of an automatic layout design method according to an embodiment of the present invention.
Figure 7 is a diagram showing an example of a display screen according to an embodiment of the present invention.
Figure 8 is a diagram showing an example of layout information according to an embodiment of the present invention.
Figure 9 is a flowchart showing an example of an automatic layout design method according to an embodiment of the present invention.
Figure 10 is a table showing an example of constraint conditions according to an embodiment of the present invention.
Figure 11 is a flowchart showing an example of an automatic layout design method according to an embodiment of the present invention.
Figure 12 is a flowchart showing an example of a processing in a range adjustment step according to an embodiment of the present invention.
Figure 13 is a diagram showing an example of layout information according to an embodiment of the present invention.
Figure 14 is a diagram showing an example of layout information according to an embodiment of the present invention.
Figure 15 is a block diagram showing an example of configuration of an automatic layout design device 1 according to an embodiment of the present invention.
Figure 16 is a block diagram showing an example of configuration of an automatic layout design system 100 according to an embodiment of the present invention.

### DESCRIPTION OF THE EMBODIMENTS

Suitable embodiments for implementing the present invention are described below with reference to the accompanying drawings. The embodiments described below are representative embodiments of the present invention, and the scope of the present invention is not limited to these embodiments. Moreover, each of the embodiments may be combined.

In the following description of embodiments, the configuration may be described using terms that include "approximately", such as approximately parallel and approximately orthogonal. For example, approximately parallel means not only perfectly parallel, but also substantially parallel, i.e., a state deviated from perfectly parallel, for example by a few percent. The same applies to other terms including "approximately". Furthermore, each drawing is a schematic diagram and is not necessarily a strict illustration.

The present invention is described in the following order.
1. Outline of the present invention
2. First embodiment (example 1 of automatic layout design method)
   (1) General design step
   (2) Floor space calculation step
   (3) General constraint conditions
3. Second embodiment (example 2 of automatic layout design method)
4. Third embodiment (example 3 of automatic layout design method)
   (1) Detailed design step
   (2) Detailed constraint conditions
5. Fourth embodiment (example 4 of automatic layout design method)
6. Fifth embodiment (example 5 of automatic layout design method)
7. Sixth embodiment (example of automatic layout design device)
8. Seventh embodiment (example of automatic layout design system)

### <1. Outline of the present invention>

Conventionally, in the design of large-scale plants where the number and types of devices that are arranged is diverse or where there are many constraint conditions, there is a problem that it takes a long time to generate layout information because the processing power of computers is limited.

To solve the problem, in the automatic layout design method according to the present invention, an arithmetic calculation unit provided in a computer generates general layout information wherein the device groups are arranged on a floor, after classifying multiple devices into multiple device groups. Thus, layout information can be generated in a short time, even for large-scale plants.

Moreover, in addition to equipment, the device may include, for example, water tanks, pumps, or racks.

In the automatic layout design method according to the present invention, an arithmetic calculation unit provided in a computer automatically generates layout information based on input data.

The input data may include, for example, information about the devices, information about network that connects devices, information about junction point, information about site, or information about room.

The information about the devices may include, for example, information such as identification information of the devices, name of the devices, type of the devices, size of the devices, or the construction phase in which the devices are used.

The information about network may include, for example, information such as the type of the connected devices or network.

A junction point is a connection point of the floor to the outside. Information about the junction point may include, for example, information such as the type of the junction point.

The information about site may include information such as, for example, area of the site, shape of the site, or the number of levels.

The information about room may include information such as type of the room, coordinates of the room, or levels, etc.

Moreover, the general layout information generated by the arithmetic calculation unit may include, for example, coordinate information, level information, or identification information for each device group.

### <2. First embodiment (Example 1 of automatic layout design method)>

### <(1) General design step>

The automatic layout design method according to an embodiment of the present invention at least includes: a classification step in which an arithmetic calculation unit provided in a computer classifies multiple devices that are arranged on a floor of a plant into multiple device groups on the basis of a degree of relevance between the multiple devices; and a general design step in which the arithmetic calculation unit generates general layout information wherein the device groups are arranged on the floor, such that a sum of distances between device groups is minimized.

A CPU (Central processing Unit), for example, may be used as the arithmetic calculation unit. The CPU may read a program to realize the arithmetic calculation unit.

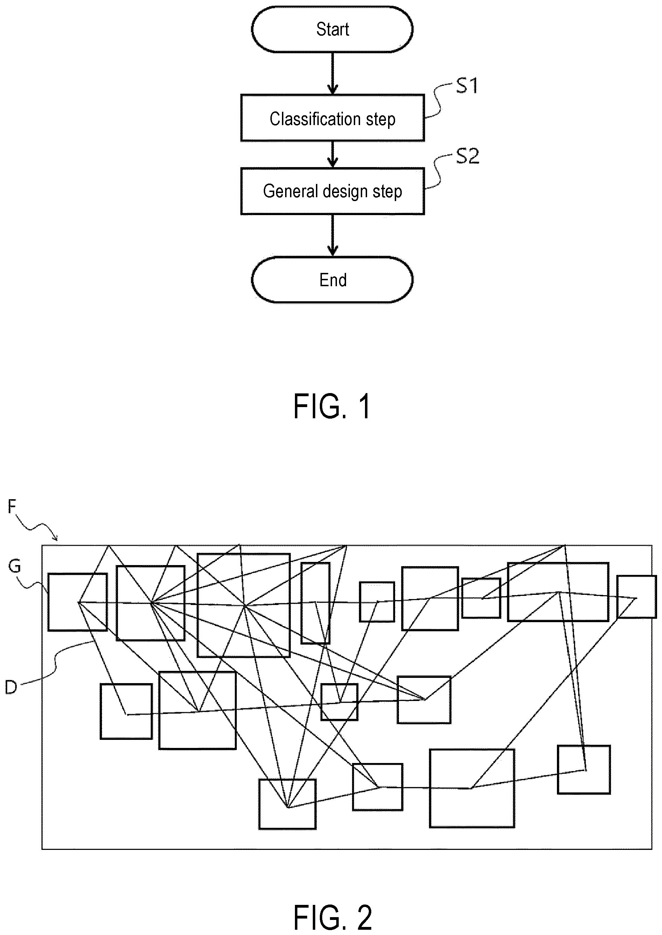

The automatic layout design method according to an embodiment of the present invention will be described with reference to Figure 1. Figure 1 is a flowchart showing an example of an automatic layout design method according to an embodiment of the present invention.

As shown in Figure 1, the automatic layout design method according to an embodiment of the present invention at least includes a classification step (step S1) and a general design step (step S2).

In the classification step (step S1), an arithmetic calculation unit provided in a computer classifies the multiple devices that are arranged on a floor of a plant into multiple device groups on the basis of a degree of relevance between the multiple devices.

A degree of relevance is an index indicating the strength of the relevance between devices. For example, the degree of relevance is stronger when the identification information of each device is partially the same, when each device is connected by pipe, when the type of each device is the same, or when the application of each device is similar. For example, a water tank and a pump may be classified in the same device group because of similar applications.

As a method for classifying multiple devices into multiple device groups, a clustering method based on machine learning (unsupervised learning) may be used. For example, the Ward's method, the shortest distance method, the longest distance method, group average method, the Centroid method, the weighted average, the median method, and the k-means methods may be used as clustering the method.

With the clustering method, the arithmetic calculation unit classifies multiple devices with high degree of relevance to each other into one device group, and classifies devices with low degree of relevance to each other into another device group.

Next, in the general design step (step S2), the arithmetic calculation unit generates general layout information wherein the device groups are arranged on the floor, such that the sum of distances between the device groups is minimized. In other words, the arithmetic calculation unit solves the optimization problem of arranging the device groups such that the sum of distances between the device groups is minimized. As a method for solving the optimization problem, a general algorithm may be used. Examples of such methods include mathematical optimization (e.g., molecular restricted method, simplex method, and interior-point methods) and metaheuristics (e.g., greedy algorithm, local search method, genetic algorithm, tabu search method, and simulated annealing method).

The general layout information is described with reference to Figure 2. Figure 2 is a diagram showing an example of layout information according to an embodiment of the present invention. As shown in Figure 2, multiple device groups G are arranged on a floor F. Moreover, a distance D between each device group G is shown.

The arithmetic calculation unit arranges the device groups G on the floor F such that the sum of the distances D is minimized. As a result, networks such as pipe, cables, and the like connected between device groups can be configured to be short. As a result, for example, costs related to plant construction can be reduced and the quality of the products output from the plant can be improved.

The computer may receive modifications in the arrangement of the device group by the user for the generated general layout information.

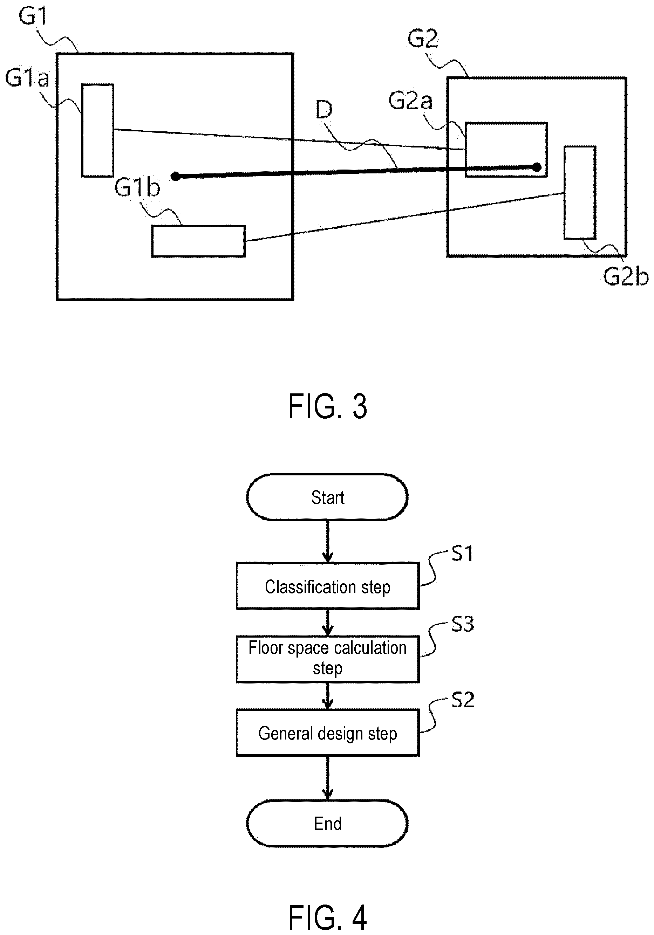

Here, the distance D is preferably the distance between approximate center points of the region where the device groups are arranged. This will be described with reference to Figure 3. Figure 3 is a diagram showing an example of layout information according to an embodiment of the present invention. As shown in Figure 3, a first device group G1 includes a first device G1a and a second device G1b. A second device group G2 includes a third device G2a and a fourth device G2b. The first device G1a and the third device G2a are connected to each other via a network. The second device G1b and the fourth device G2b are connected to each other via a network.

At this time, when the distance D is the distance between the approximate center points of the region where the device groups are arranged, an average length of the network connected between the devices may be obtained. Thus, the arithmetic calculation unit can obtain the length of the network with better accuracy.

A computer realizing the automatic layout design method according to an embodiment of the present invention may be, for example, a smartphone terminal, a tablet terminal, a mobile phone terminal, a PDA (Personal Digital Assistant), a PC (Personal Computer), a server, or a wearable terminal (HMD: Head Mounted Display, glasses-type HMD, watch-type terminal, band-type terminal, etc.).

A program that realizes the automatic layout design method according to an embodiment of the present invention may be stored in another computer or computer system. In this case, the computer may use a cloud service that provides the functions that this program has. Examples of the cloud service include SaaS (Software as a Service), IaaS (Infrastructure as a Service), PaaS (Platform as a Service), etc.

Furthermore, the program may be stored using various types of non-transitory computer readable medium and supplied to a computer. The non-transitory computer readable medium includes various types of tangible storage medium. Examples of the non-transitory computer readable medium includes magnetic storage medium (e.g., flexible disk, magnetic tape, hard disk drive), magneto-optical storage medium (e.g., magneto-optical disk), Compact Disc Read Only Memory (CD-ROM), CD-R, CD-R/W, semiconductor memory (e.g., mask ROM, Programmable ROM (PROM), Erasable PROM (EPROM), Flash ROM, Random Access Memory (RAM)). Moreover, the above program may also be supplied to a computer by various types of transitory computer readable media. Examples of the transitory computer readable medium includes electrical signal, optical signal, and electromagnetic wave. The transitory computer readable medium may supply the above program to a computer via a wired communication channel, such as a wire and optical fiber, or a wireless communication channel.

### <(2) Floor space calculation step>

The automatic layout design method according to an embodiment of the present invention may further include a floor space calculation step. This will be described with reference to Figure 4. Figure 4 is a flowchart showing an example of an automatic layout design method according to an embodiment of the present invention.

As shown in Figure 4, the automatic layout design method according to an embodiment of the present invention further includes a floor space calculation step (step S3).

In the floor space calculation step (step S3), the arithmetic calculation unit calculates the floor space for each device group by modifying an arrangement pattern of the multiple devices included in the device group. Thus, in the general design step (step S2), arrangement of the device group is possible.

The arithmetic calculation unit may modify the arrangement of the multiple devices included in each device group such that the floor space of each device group is as small as possible. Thus, space is saved in the region where the devices are arranged. As a result, the floor can be effectively utilized.

Although not shown in the drawings, the floor space calculation step (step S3) may be performed after the general design step (step S2). The floor space calculation step (step S3) and the general design step (step S2) are repeated to optimize the arrangement of each device group.

### <(3) General constraint conditions>

In the general design step (Step S2), the arithmetic calculation unit may generate general layout information on the basis of general constraint conditions. The general constraint conditions are the constraint conditions referenced in the general design step (Step S2).

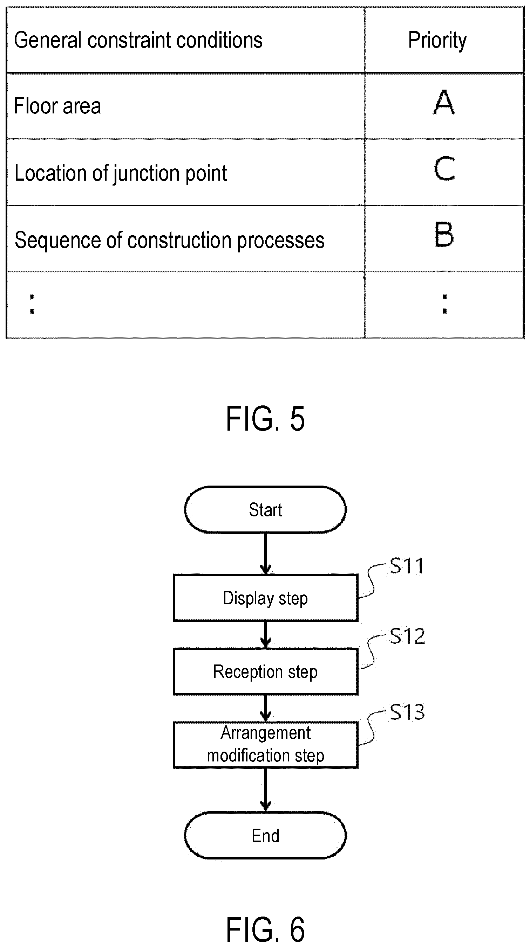

The general constraint conditions are described with reference to Figure 5. Figure 5 is a table showing an example of constraint conditions according to an embodiment of the present invention.

As shown in Figure 5, the general constraint conditions may at least include one among a group composed of floor space, location of a junction point, and sequence of construction processes of the plant.

By including floor space in the general constraint conditions, the arithmetic calculation unit may arrange the device groups such that the sum of floor space of each device group does not exceed the floor space as much as possible.

By including location of a junction point in the general constraint conditions, the arithmetic calculation unit may arrange the device groups such that the distance between the junction point and the device group is as short as possible. The location of a junction point may be set, for example, by the user.

By including sequence of construction processes of the plant in the general constraint conditions, the arithmetic calculation unit may arrange the device groups while considering the sequence of construction processes. For example, the arithmetic calculation unit may arrange a device group that includes a device arranged in a later process on the edge of the floor. Thus, it is possible to prevent other devices from interfering with the work when the devices in this device group are arranged at the work site.

Each of the general constraint conditions may be given a priority, for example. In this example, the priority is set to A, B, or C, and the floor space to which A is set has the highest priority. The arithmetic calculation unit generates the general layout information in which the floor space is most taken into account.

The general constraint conditions may be stored, for example, in a memory unit provided in the computer. The memory unit may be realized by using, for example, a storage unit. The arithmetic calculation unit generates the general layout information in the general design step (step S2) while referring to the general constraint conditions stored in the memory unit.

The above description of the automatic layout design method according to the first embodiment of the present invention may be applied to other embodiments of the present invention as long as there is no particular technical contradiction.

### <3. Second embodiment (Example 2 of automatic layout design method)>

The automatic layout design method according to an embodiment of the present invention may further include: a display step in which the display unit provided in the computer displays the general layout information; a reception step in which the reception unit provided in the computer receives an evaluation result for the general layout information; and an arrangement modification step in which the arithmetic calculation unit modifies the arrangement of the device group on the basis of the evaluation result.

The automatic layout design method according to an embodiment of the present invention will be described with reference to Figure 6. Figure 6 is a flowchart showing an example of an automatic layout design method according to an embodiment of the present invention.

As shown in Figure 6, the automatic layout design method according to an embodiment of the present invention may further include a display step (step S11), a reception step (step S12), and an arrangement modification step (step S13).

In the display step (step S11), a display unit provided in the computer displays the general layout information generated by the arithmetic calculation unit. For example, a display device may be used as the display unit.

In the reception step (step S12), a reception unit provided in a computer receives an evaluation result for the general layout information. For example, a mouse, keyboard, or touch pad may be used as the reception unit.

In the arrangement modification step (step S13), the arithmetic calculation unit modifies the arrangement of the device group on the basis of the evaluation result. Thus, more appropriate general layout information for the user can be generated.

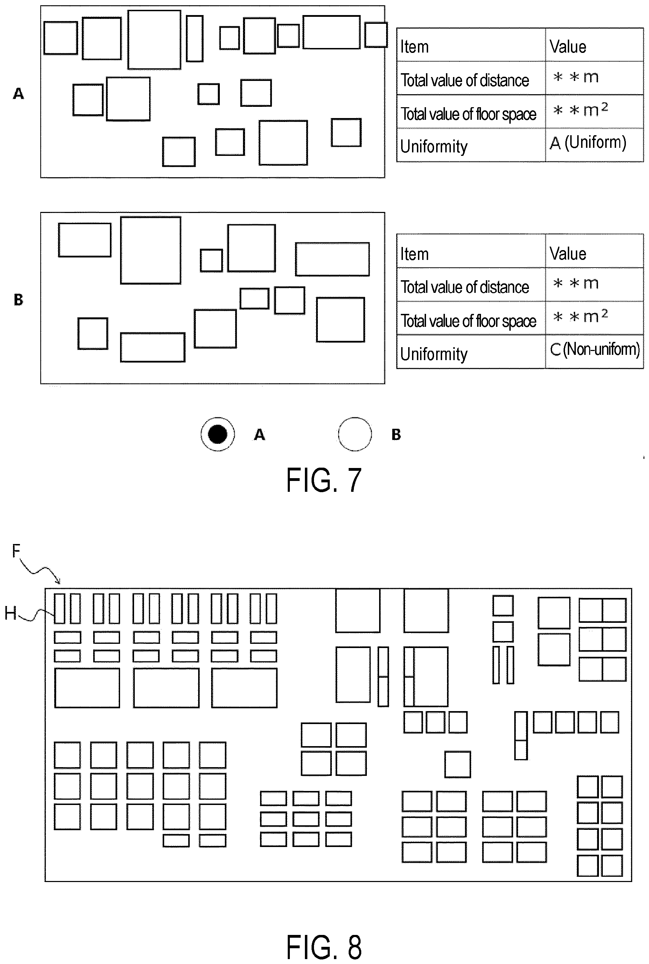

This embodiment will be further described with reference to Figure 7. Figure 7 is a diagram showing an example of a display screen according to an embodiment of the present invention.

As shown in Figure 7, multiple general layout information are displayed on a display screen displayed on a computer according to an embodiment of the present invention. In other words, the arithmetic calculation unit may generate multiple general layout information. Moreover, the number of general layout information generated is not particularly limited.

For example, among the multiple general layout information displayed on the display screen, one may be the general layout information with the highest evaluation so far, and one may be the general layout information with the latest generation date and time. Thus, the user is able to easily determine which general layout information is more appropriate.

Each general layout information shows parameters related to each general layout information. In this example, the sum of the distances between device groups, the sum of the floor space of each device group, and uniformity are shown as examples of the parameters. Furthermore, the number of levels, for example, may also be shown. By having the parameters indicated, the user is able to easily determine which general layout information is more appropriate.

The user inputs the evaluation result for the general layout information. The evaluation means is not limited, but in this example, the user may select which of the general layout information is more appropriate.

The arithmetic calculation unit recalculates the parameters related to the plant on the basis of the evaluation result. Examples of these parameters include the number of levels, the orientation and location of each room, and so on. Furthermore, the arithmetic calculation unit may modify the size of each device group.

The arithmetic calculation unit then modifies the arrangement of the device group based on the parameters and generates the general layout information.

Machine learning may be used to generate general layout information by the arithmetic calculation unit. Machine learning is a learning method that discovers certain rules from certain data and realizes inferences and predictions for unknown data based on those rules. Known techniques for machine learning may be used. This may be realized by using a computer having machine learning functions, a learning model, or the like. The learning model may perform machine learning by associating, for example, evaluation results by the user with evaluated general layout information. Thus, the accuracy of the generated general layout information is improved and the generation time of the general layout information is reduced.

The method of machine learning is not limited, but for example, decision tree learning such as ID3 (Iterative Dichotomiser 3) or random forests, correlation rule learning, and the like may be used. Alternatively, artificial neural network (ANN), deep neural network (DNN), convolutional neural network (CNN), recurrent neural network (RNN), and other types of neural networks may be used. Alternatively, genetic programming (GP), inductive logic programming (ILP), fuzzy algorithm, evolutionary algorithm (EA), reinforcement learning, support vector machine (SVM), clustering, Bayesian network, and the like may be used. Furthermore, a combination of these methods or a development of these methods using deep learning techniques may be used.

The above description of the automatic layout design method according to the second embodiment of the present invention may be applied to other embodiments of the present invention as long as there is no particular technical contradiction.

### <4. Third embodiment (Example 3 of automatic layout design method)>

### <(1) Detailed design step>

The automatic layout design method according to an embodiment of the present invention may further include a detailed design step in which the arithmetic calculation unit generates detailed layout information on the basis of detailed constraint conditions after the general design step.

The detailed layout information is layout information in which the arrangement of devices included in each device group is designed. The detailed layout information is described with reference to Figure 8. Figure 8 is a diagram showing an example of layout information according to an embodiment of the present invention. As shown in Figure 8, multiple devices H are arranged on the floor F. The detailed layout information may include, for example, coordinate information or identification information related to each device H.

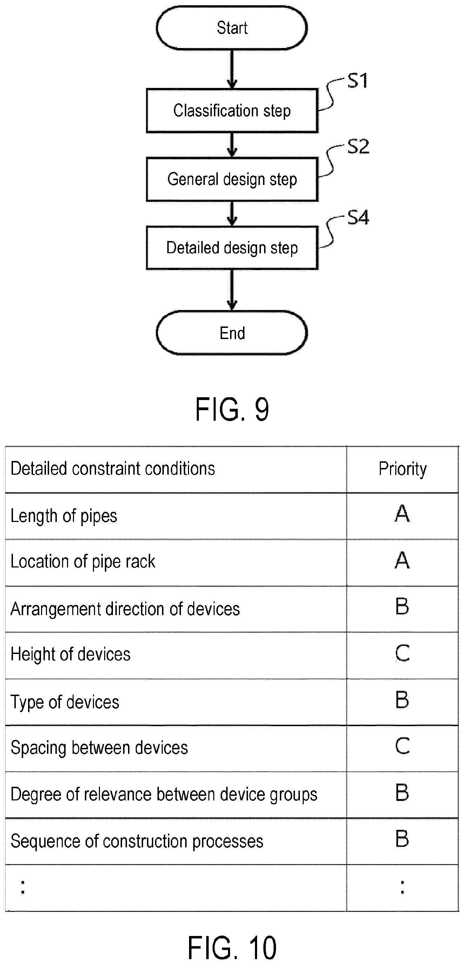

The automatic layout design method according to an embodiment of the present invention will be described with reference to Figure 9. Figure 9 is a flowchart showing an example of an automatic layout design method according to an embodiment of the present invention.

As shown in Figure 9, the automatic layout design method according to an embodiment of the present invention may further include a detailed design step (step S4) after the general design step (step S2).

In the detailed design step (step S4), the arithmetic calculation unit generates detailed layout information on the basis of the detailed constraint conditions. The detailed constraint conditions are the constraint conditions referenced in the detailed design step (step S4). The detailed constraint conditions may be stored, for example, in a memory unit provided in a computer. The arithmetic calculation unit generates the detailed layout information in the detailed design step (step S4) with reference to the detailed constraint conditions stored in the memory unit.

According to the present invention, after the arrangement of the device group is designed in the general design step (step S2), the arrangement of the devices is designed in the detailed design step (step S4). Thus, layout information can be generated in a shorter time than when the arrangement of devices is designed from the beginning.

Moreover, the computer may receive modifications in the arrangement of the device group by the user for the generated detailed layout information.

### <(2) Detailed Constraint conditions>

The general constraint conditions are described with reference to Figure 10. Figure 10 is a table showing an example of constraint conditions according to an embodiment of the present invention.

As shown in Figure 10, detailed constraint conditions may at least include one among a group composed of length of pipes connected between the devices, location of a pipe rack, arrangement direction of the devices, height of the devices, type of the devices, spacing between devices, degree of relevance between the device groups, and sequence of construction processes of the plant.

The automatic layout design method according to an embodiment of the present invention will be described below using a water treatment plant as an example of a plant. A water treatment plant treats raw water and discharges effluent. The effluent includes, for example, discharged water discharged by the water treatment plant and the supply water (treated water) supplied by the water treatment plant.

By including length of pipes in the detailed constraint conditions, the arithmetic calculation unit may arrange the devices such that the length of pipes connected between the devices is as short as possible. In water treatment plants, shortening the length of pipes as much as possible greatly contributes to improving the quality of effluent and reducing costs.

The length of pipes may be multiplied by a weighting coefficient corresponding to the type of pipe. For example, a pipe that particularly affects the quality of the effluent may be assigned a higher weighting coefficient. Thus, a pipe that particularly affects the quality of the effluent can be designed to be particularly short.

By including location of a pipe rack in the detailed constraint conditions, the arithmetic calculation unit may arrange the devices while considering the location of the pipe rack. A pipe rack is a rack that supports pipes arranged in a plant. In a water treatment plant, the design must take into account the location of the pipe rack.

For example, the arithmetic calculation unit may arrange the device to which many pipes are connected near the pipe rack. Thus, the number of components supporting the pipe can be reduced. As a result, costs are reduced.

For example, the arithmetic calculation unit may arrange the devices such that multiple pipes connected to each of multiple devices lined up in parallel as viewed from the pipe rack side are gathered in the pipe rack. Thus, the number of components supporting the pipe can be reduced. As a result, costs are reduced.

By including arrangement direction of the devices in the detailed constraint conditions, the arithmetic calculation unit may arrange the devices while considering the arrangement direction of the devices.

For example, when the devices adjacent to each other are arranged with the surfaces to be maintained in the same direction or in opposite directions to each other, the travel distance of the worker performing maintenance is reduced. As a result, the efficiency of maintenance work is improved.

By including height of the devices in the detailed constraint conditions, the arithmetic calculation unit may arrange the devices while considering the height of the devices.

For example, the arithmetic calculation unit may arrange the devices lower in height than the plate supporting the pipes included in the pipe rack under the pipe rack. Alternatively, the arithmetic calculation unit may arrange the devices such that the top of the device does not touch the ceiling. As a result, the floor can be effectively utilized.

By including type of the devices in the detailed constraint conditions, the arithmetic calculation unit may arrange the devices while considering the type of devices.

For example, the arithmetic calculation unit may arrange the water tank and a pump, a junction point and a device connected to the junction point, or multiple devices connected by specific pipe, respectively, to be near each other.

By including spacing between the devices in the detailed constraint conditions, the arithmetic calculation unit may arrange devices while considering the spacing between devices.

For example, the arithmetic calculation unit may arrange the devices with a spacing between them such that a passage for the worker is secured.

By including the degree of relevance between the device groups in the detailed constraint conditions, the arithmetic calculation unit may arrange devices while considering the degree of relevance between device groups.

For example, the arithmetic calculation unit may arrange a device group that includes a device that increases the pH (hydrogen ion index) of water and a device group that includes a treatment that lowers the pH of water to be near each other. Thus, each device group can be surrounded by the same dike. As a result, costs are reduced.

By including sequence of construction processes of the plant in the detailed constraint conditions, the arithmetic calculation unit may arrange the devices while considering the sequence of construction processes. For example, the arithmetic calculation unit may arrange a device that is arranged in a later process on the edge of the floor. Thus, it is possible to prevent other devices from interfering with the work when a device is arranged at the work site.

Furthermore, the detailed constraint conditions may include, for example, information about the floor. Thus, the arithmetic calculation unit can arrange the device such that it does not protrude from the floor.

Furthermore, similar to the general constraint conditions, each of the detailed constraint conditions may be given a priority, for example.

The above description of the automatic layout design method according to the third embodiment of the present invention may be applied to other embodiments of the present invention as long as there is no particular technical contradiction.

### <5. Fourth embodiment (Example 4 of automatic layout design method)>

The automatic layout design method according to an embodiment of the present invention may further include a range adjustment step in which the arithmetic calculation unit adjusts the target range in the detailed layout information on the basis of the generation time or accuracy of the detailed layout information.

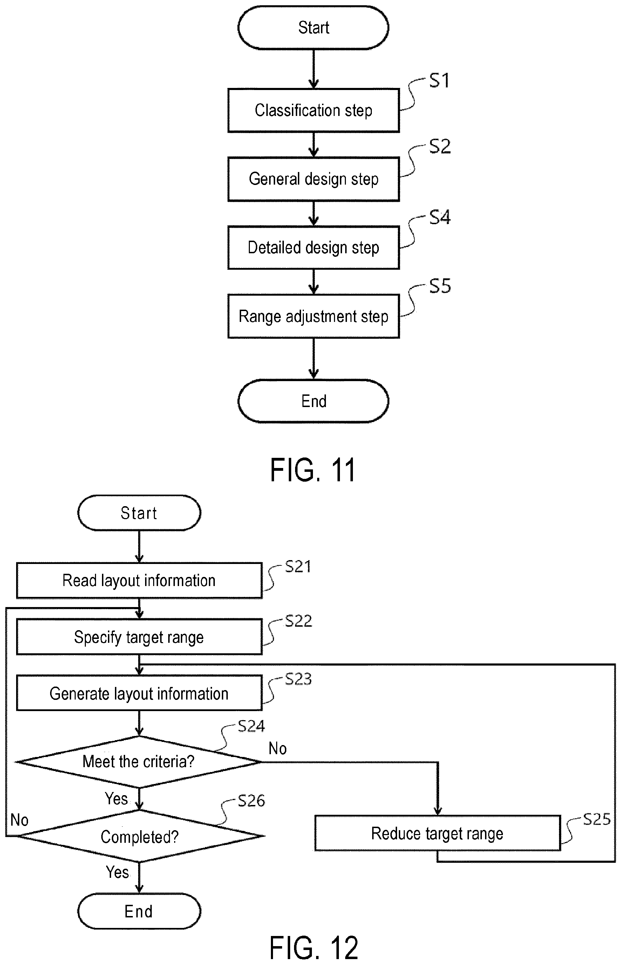

The automatic layout design method according to an embodiment of the present invention will be described with reference to Figure 11. Figure 11 is a flowchart showing an example of an automatic layout design method according to an embodiment of the present invention.

As shown in Figure 11, the automatic layout design method according to an embodiment of the present invention further includes a range adjustment step (step S5).

In the range adjustment step (step S5), the arithmetic calculation unit adjusts the target range in the detailed layout information on the basis of the generation time or accuracy of the detailed layout information. In other words, when the generation time of the detailed layout information is long, the arithmetic calculation unit reduces the target range such that the generation time becomes shorter. Alternatively, when the accuracy of the detailed layout information is low, the arithmetic calculation unit reduces the target range to increase the accuracy. In this way, the arithmetic calculation unit can generate highly accurate detailed layout information in a shorter time. Accuracy refers to the closeness to the optimal solution in the target range.

The flow of processing in the range adjustment step is described with reference to Figure 12. Figure 12 is a flowchart showing an example of a processing in a range adjustment step according to an embodiment of the present invention.

As shown in Figure 12, first, in step S21, the arithmetic calculation unit reads the general layout information.

Next, in step S22, the arithmetic calculation unit specifies a target range in the detailed layout information. Not all device groups included in the detailed layout information are included in the target range, but only specific device groups are included in the target range.

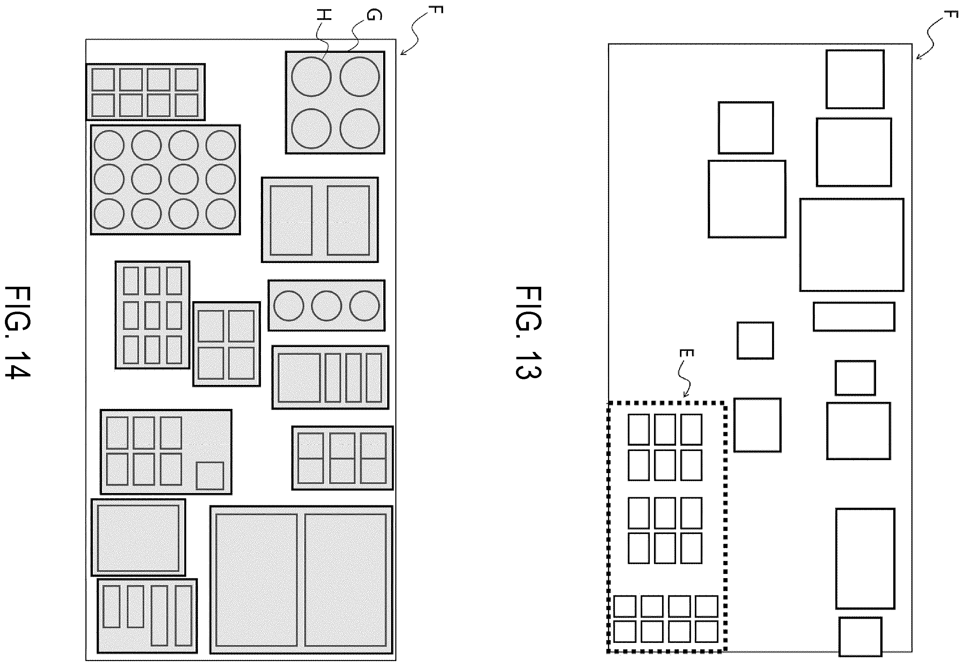

Next, in step S23, the arithmetic calculation unit generates detailed layout information in which device groups and/or devices are arranged in the target range. This will be described with reference to Figure 13. Figure 13 is a diagram showing an example of layout information according to an embodiment of the present invention. As shown in Figure 13, a target range E is specified. The arithmetic calculation unit arranges device groups and/or devices in the target range E. The arithmetic calculation unit may make the target range E larger or smaller on the basis of the generation time or accuracy of the detailed layout information.

Return to the description of Figure 12. Next, in step S24, the arithmetic calculation unit makes a determination based on an evaluation index such as the generation time or accuracy of the detailed layout information. Moreover, an evaluation index may be set in addition to the generation time or accuracy.

When the evaluation index does not meet a predetermined criteria (step S24: No), in step S25, the arithmetic calculation unit reduces the target range. That is, when the generation time of the detailed layout information is longer than a predetermined threshold, or when the accuracy of the detailed layout information is lower than a predetermined threshold, in step S25, the arithmetic calculation unit reduces the target range.

Also, in the opposite case, for example, when the generation time of the detailed layout information is shorter than a predetermined threshold, or when the accuracy of the detailed layout information is higher than a predetermined threshold, the arithmetic calculation unit may increase the target range.

Then, again in step S23, the arithmetic calculation unit generates the detailed layout information in which device groups and/or devices are arranged in the target range. With the target range becoming smaller, the arithmetic calculation unit can generate layout information in a shorter time.

When the above processing is performed and the evaluation index satisfies the predetermined criteria (step S24: Yes), in step S26, the arithmetic calculation unit determines whether or not the generation of detailed layout information is completed. In other words, the arithmetic calculation unit determines whether or not the processing for all the device groups included in the detailed layout information is completed.

When the generation of detailed layout information is not completed (step S26: No), in step S22, the arithmetic calculation unit specifies another target range. Then, the processing of steps S23 to S26 are performed.

With the above processing, the arithmetic calculation unit may generate highly accurate detailed layout information in a shorter time.

The above description of the automatic layout design method according to the fourth embodiment of the present invention may be applied to other embodiments of the present invention as long as there is no particular technical contradiction.

### <6. Fifth embodiment (Example 5 of the automatic layout design method)>

The general layout information may include the shape of each of the multiple devices included in the device group. This is described with reference to Figure 14. Figure 14 is a diagram showing an example of layout information according to an embodiment of the present invention. As shown in Figure 14, a general layout information F includes the shape of each of the multiple devices H included in the device group G.

Thus, when referring to the general layout information For modifying the arrangement of the device group G, the speed at which the user identifies each device H can be improved. Identification by the shape of the device allows more intuitive identification than identification by device identification numbers, and the like. Furthermore, the shape of the device affects the shape of the floor on which the device is arranged. Therefore, the arithmetic calculation unit can more reliable generate general layout information.

The information on the shape of the device may be stored, for example, in a memory unit provided in the computer. The arithmetic calculation unit generates the general layout information by referring to the information related to the shape of the device stored in the memory unit.

Moreover, the shape of the device included in the general layout information does not necessarily have to be a strict representation of the shape of the actual device. For example, the shape of the device included in the general layout information may be a simplified version of the shape of the actual device.

The above description of the automatic layout design method according to the fifth embodiment of the present invention may be applied to other embodiments of the present invention as long as there is no particular technical contradiction.

### <7. Sixth embodiment (example of automatic layout design device)>

The automatic layout design device according to an embodiment of the present invention includes: an arithmetic calculation unit that classifies multiple devices that are arranged on floor of a plant into multiple device groups on the basis of the degree of relevance between the multiple devices; generates layout information wherein the device groups are arranged on the floor, such that a sum of distances between the device groups is minimized; and generates detailed layout information on the basis of detailed constraint conditions.

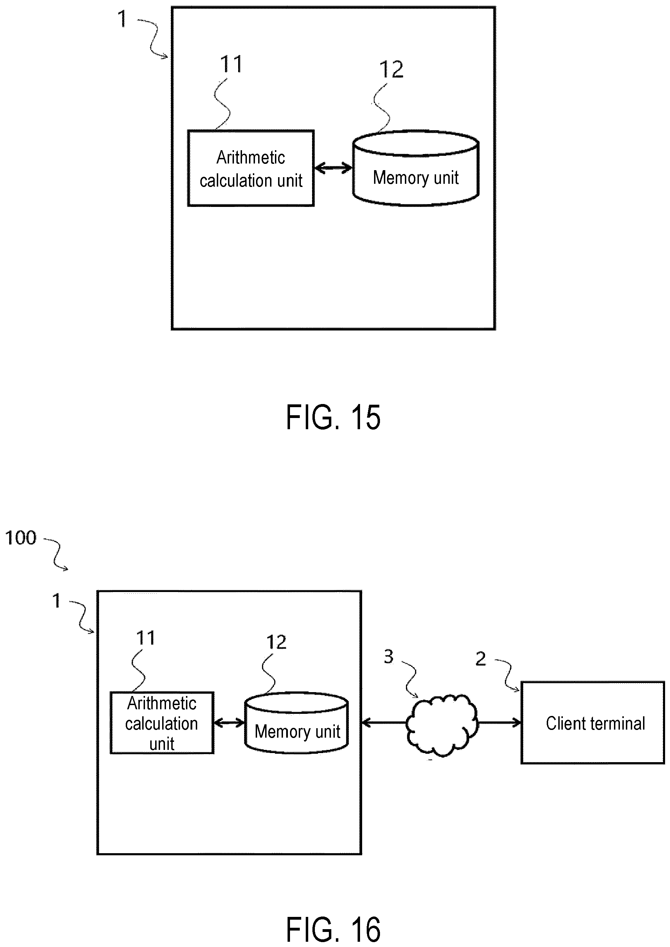

The automatic layout design device according to an embodiment of the present invention will be described with reference to Figure 15. Figure 15 is a block diagram showing an example of configuration of an automatic layout design device 1 according to an embodiment of the present invention.

As shown in Figure 15, the automatic layout design device 1 according to an embodiment of the present invention includes an arithmetic calculation unit 11 and a memory unit 12.

The arithmetic calculation unit 11 classifies multiple devices that are arranged on a floor of a plant into multiple device groups on the basis of the degree of relevance between the multiple devices; generates general layout information wherein the device groups are arranged on the floor, such that the sum of distances between the device groups is minimized, and generates detailed layout information on the basis of detailed constraint conditions.

The memory unit 12 stores the detailed constraint conditions.

The automatic layout design device according to this embodiment may use the technology related to the above automatic layout design method. Therefore, a detailed description of the automatic layout design device is omitted.

The above description of the automatic layout design device according to the sixth embodiment of the present invention may be applied to other embodiments of the present invention as long as there is no particular technical contradiction.

### <8. Seventh embodiment (example of automatic layout design system)>

The automatic layout design system according to an embodiment of the present invention includes the automatic layout design device according to the fifth embodiment of the present invention.

The automatic layout design system according to an embodiment of the present invention will be described with reference to Figure 16. Figure 16 is a block diagram showing an example configuration of an automatic layout design system 100 according to an embodiment of the present invention.

As shown in Figure 16, the automatic layout design system 100 according to an embodiment of the present invention may include the automatic layout design device 1 and a client terminal 2.

The automatic layout design device 1 and the client terminal 2 are connected to each other via an information and a communication network 3, such as the Internet, for example. Thus, for example, layout information generated by the automatic layout design device 1 can be viewed at the client terminal 2.

The above description of the automatic layout design system according to the seventh embodiment of the present invention may be applied to other embodiments of the present invention as long as there is no particular technical contradiction.

In addition to the above, the configurations mentioned in the above embodiments may be selected or modified to other configurations as appropriate without departing from the main purpose of the present invention.

The present invention may also be configured as follows.
[1] An automatic layout design method, at least including:
   a classification step in which an arithmetic calculation unit provided in a computer classifies multiple devices that are arranged on a floor of a plant into multiple device groups on the basis of a degree of relevance between the multiple devices; and
   a general design step in which the arithmetic calculation unit generates general layout information wherein the device groups are arranged on the floor, such that a sum of distances between the device groups is minimized.
[2] The automatic layout design method according to [1], further including:
   a floor space calculation step in which the arithmetic calculation unit calculates a floor space for each of the device groups by modifying an arrangement pattern of the multiple devices included in the device groups.
[3] The automatic layout design method according to [1] or [2],
   wherein the arithmetic calculation unit generates the general layout information on the basis of general constraint conditions in the general design step.
[4] The automatic layout design method according to [3],
   wherein the general constraint conditions at least include one among a group including the floor space, location of a junction point, and sequence of construction processes of the plant.
[5] The automatic layout design method according to any one of [1] to [4], including:
   a display step in which a display unit provided in the computer displays the general layout information;
   a reception step in which a reception unit provided in the computer receives an evaluation result for the general layout information; and
   an arrangement modification step in which the arithmetic calculation unit modifies an arrangement of the device groups on the basis of the evaluation result.
[6] The automatic layout design method according to any one of [1] to [5], further including:
   a detailed design step in which the arithmetic calculation unit generates detailed layout information on the basis of detailed constraint conditions after the general design step.
[7] The automatic layout design method according to [6],
   wherein the detailed constraint conditions at least include one among a group including length of pipes connected between the devices, location of a pipe rack, arrangement direction of the devices, height of the devices, type of the devices, spacing between the devices, degree of relevance between the device groups, and sequence of construction processes of the plant.
[8] The automatic layout design method according to [6] or [7], further including:
   a range adjustment step in which the arithmetic calculation unit adjusts a target range in the detailed layout information on the basis of generation time or accuracy of the detailed layout information.
[9] The automatic layout design method according to any one of [1] to [8],
   wherein the general layout information includes a shape of each of the multiple devices included in the device groups.
[10] An automatic layout design device, including:
   an arithmetic calculation unit that:
   classifies multiple devices that are arranged on a floor of a plant into multiple device groups on the basis of a degree of relevance between the multiple devices;
   generates general layout information wherein the device groups are arranged on the floor, such that a sum of distances between the device groups is minimized; and
   generates detailed layout information on the basis of detailed constraint conditions.
[11] An automatic layout design system, including: an automatic layout design device according to [10].

### [Reference Signs List]

S1 Classification step
S2 General design step
S3 Floor space calculation step
S4 Detailed design step
S5 Range adjustment step
S 11 Display step
S12 Reception step
S13 Arrangement modification step
1 Automatic layout design device
11 Arithmetic calculation unit
12 Memory unit
2 Client terminal
3 Information communication network
100 Automatic layout design system

## Claims

1. An automatic layout design method, at least comprising:
a classification step in which an arithmetic calculation unit provided in a computer classifies a plurality of devices that are arranged on a floor of a plant into a plurality of device groups on the basis of a degree of relevance between the plurality of devices; and
a general design step in which the arithmetic calculation unit generates general layout information wherein the device groups are arranged on the floor, such that a sum of distances between the device groups is minimized.

2. The automatic layout design method according to claim 1, further comprising:
a floor space calculation step in which the arithmetic calculation unit calculates a floor space for each of the device groups by modifying an arrangement pattern of the plurality of devices included in the device groups.

3. The automatic layout design method according to claim 1 or 2,
wherein the arithmetic calculation unit generates the general layout information on the basis of general constraint conditions in the general design step.

4. The automatic layout design method according to claim 3,
wherein the general constraint conditions at least comprise one among a group composed of the floor space, location of a junction point, and sequence of construction processes of the plant.

5. The automatic layout design method according to any one of claims 1 to 4, further comprising:
a display step in which a display unit provided in the computer displays the general layout information;
a reception step in which a reception unit provided in the computer receives an evaluation result for the general layout information; and
an arrangement modification step in which the arithmetic calculation unit modifies an arrangement of the device groups on the basis of the evaluation result.

6. The automatic layout design method according to any one of claims 1 to 5, further comprising:
a detailed design step in which the arithmetic calculation unit generates detailed layout information on the basis of detailed constraint conditions after the general design step.

7. The automatic layout design method according to claim 6,
wherein the detailed constraint conditions at least comprise one among a group composed of length of pipes connected between the devices, location of a pipe rack, arrangement direction of the devices, height of the devices, type of the devices, spacing between the devices, degree of relevance between the device groups, and sequence of construction processes of the plant.

8. The automatic layout design method according to claim 6 or 7, further comprising:
a range adjustment step in which the arithmetic calculation unit adjusts a target range in the detailed layout information on the basis of generation time or accuracy of the detailed layout information.

9. The automated layout design method according to any one of claims 1 to 8,
wherein the general layout information comprises a shape for each of the plurality of devices included in the device groups.

10. An automatic layout design device, comprising:
an arithmetic calculation unit that:
classifies a plurality of devices that are arranged on a floor of a plant into a plurality of device groups on the basis of a degree of relevance between the plurality of devices;
generates general layout information wherein the device groups are arranged on the floor, such that a sum of distances between the device groups is minimized; and
generates detailed layout information on the basis of detailed constraint conditions.

11. An automatic layout design system comprising an automatic layout design device according to claim 10.
